# EUROPEAN PATENT APPLICATION

(11) **EP 4 454 738 A1**
(43) Date of publication of application: **30.10.2024**
(21) Application number: 22911291.7
(22) Date of filing: 21.12.2022
(51) Int. Cl.: B01D 63/02, B01D 71/32

(54) **HOLLOW FIBER MEMBRANE MODULE AND HOLLOW FIBER MEMBRANE FOR MODULE**

(30) Priority: 24.12.2021 JP 2021211721
(71) Applicant: Sumitomo Electric Fine Polymer, Inc., Sennan-gun, Osaka 590-0458 (JP)
(72) Inventor: HAYASHI, Fumihiro, Sennan-gun, Osaka 590-0458 (JP); MUROYA, Yasuhiko, Sennan-gun, Osaka 590-0458 (JP); HASHIMOTO, Takamasa, Sennan-gun, Osaka 590-0458 (JP); SUZUKI, Yoshimasa, Sennan-gun, Osaka 590-0458 (JP)
(74) Representative: Boult Wade Tennant LLP
(86) International application number: PCT/JP2022/047163
(87) International publication number: WO 2023/120589

(57) **Abstract**

A hollow fiber membrane module according to an aspect of the present disclosure comprises: a hollow fiber membrane bundle that has a plurality of hollow fiber membranes aligned in one direction; a housing that accommodates the hollow fiber membrane bundle; and a potting portion provided around both ends or one end of the hollow fiber membrane bundle, in which space between an outer surface of the hollow fiber membranes and an inner surface of the housing is filled with a potting agent, wherein each of the hollow fiber membranes has a body portion, and an enlarged-diameter portion provided at both ends or one end of the body portion and having an inner diameter enlarged as compared to the body portion, and the enlarged-diameter portion is buried in the potting portion.

## Description

### TECHNICAL FIELD

The present disclosure relates to a hollow fiber membrane module and a hollow fiber membrane for a module. The present application claims the benefit of priority to Japanese Patent Application No. 2021-211721 filed on December 24, 2021, the entire contents of which are incorporated herein by reference.

### BACKGROUND ART

For the purpose of filtrating various treatment-target liquids, a so-called crossflow-type hollow fiber membrane module is used, which accommodates a plurality of hollow fiber membranes aligned in one direction inside a round tubular casing; where a treatment-target liquid is supplied into the casing through a treatment-target liquid nozzle provided at one end of the casing, the filtrated liquid that has been permeated into the interior space of each hollow fiber membrane is discharged through a filtrated liquid nozzle provided at the other end of the casing, and the concentrated liquid, which is the treatment-target liquid that has been concentrated, is discharged through a concentrated liquid nozzle provided on the side surface of the casing near the above-mentioned other end.

The shape of the casing of such a hollow fiber membrane module is typically round tubular, and, after the plurality of hollow fiber membranes are inserted into the casing in the axial direction, both ends of the round tubular member are sealed. Typically, as the means for sealing the ends of the round tubular member, a cap member is used and secured with a screw (see Japanese Patent Laying-Open No. 11-5024).

### CITATION LIST

### PATENT LITERATURE

PTL 1: Japanese Patent Laying-Open No. 11-5024

### SUMMARY OF INVENTION

A hollow fiber membrane module according to an aspect of the present disclosure comprises: a hollow fiber membrane bundle that has a plurality of hollow fiber membranes aligned in one direction; a housing that accommodates the hollow fiber membrane bundle; and a potting portion provided around both ends or one end of the hollow fiber membrane bundle, in which space between an outer surface of the hollow fiber membranes and an inner surface of the housing is filled with a potting agent, wherein each of the hollow fiber membranes has a body portion, and an enlarged-diameter portion provided at both ends or one end of the body portion and having an inner diameter enlarged as compared to the body portion, and the enlarged-diameter portion is buried in the potting portion.

A hollow fiber membrane for a module according to another aspect of the present disclosure has a body portion, and an enlarged-diameter portion provided at both ends or one end of the body portion and having an inner diameter enlarged as compared to the body portion.

### BRIEF DESCRIPTION OF DRAWINGS

Fig. 1 is a schematic longitudinal cross-sectional view of a hollow fiber membrane module according to a first embodiment.
Fig. 2 is a schematic perspective view of a hollow fiber membrane according to a first embodiment.
Fig. 3 is an A-A line end face view of the hollow fiber membrane in Fig. 2.
Fig. 4 is a B-B line end face view of the hollow fiber membrane in Fig. 2.
Fig. 5 is a schematic diagram of an apparatus used for measuring pressure for passing air.
Fig. 6 is a schematic diagram of an apparatus used for measuring deaeration performance.

### DETAILED DESCRIPTION

### [Problem to be Solved by the Present Disclosure]

The hollow fiber membrane module has problems that are yet to be solved; the region of the hollow fiber membranes that is buried in the potting portion does not have separation function and rather causes pressure loss for fluid, and this pressure loss causes a decrease of differential pressure in the thickness direction of the membranes, leading to an impairment of separation performance and a need for more energy to deliver liquid and/or gas. In recent years, hollow fiber membrane modules have been used in various applications such as semiconductors, food, pharmaceuticals, and waste water treatment, and further enhancement in the separation performance is demanded.

The present disclosure has been devised in view of these circumstances, and has an object to provide a hollow fiber membrane module with excellent separation performance.

### [Advantageous Effect of the Present Disclosure]

A hollow fiber membrane module according to an aspect of the present disclosure has excellent separation performance.

### [Description of Embodiments]

First, a description will be given of aspects of the present disclosure.

A hollow fiber membrane module according to an aspect of the present disclosure comprises a hollow fiber membrane bundle that has a plurality of hollow fiber membranes aligned in one direction; a housing that accommodates the hollow fiber membrane bundle; and a potting portion provided around both ends or one end of the hollow fiber membrane bundle, in which space between an outer surface of the hollow fiber membranes and an inner surface of the housing is filled with a potting agent, wherein each of the hollow fiber membranes has a body portion, and an enlarged-diameter portion provided at both ends or one end of the body portion and having an inner diameter enlarged as compared to the body portion, and the enlarged-diameter portion is buried in the potting portion.

With the hollow fiber membrane having an enlarged-diameter portion having an inner diameter enlarged as compared to the body portion and, also, with the enlarged-diameter portion buried in the potting portion, the hollow fiber membrane module is capable of reducing resistance against fluid passing inside the hollow fiber membranes. Therefore, the hollow fiber membrane module has excellent separation performance.

Preferably, the average inner-diameter ratio of the enlarged-diameter portion to the body portion is from 1.2 to 2.5. With the average inner-diameter ratio of the enlarged-diameter portion falling within the above-mentioned range, fluid resistance can be reduced and a sufficient number of hollow fiber membranes can be accommodated inside the housing. Because pressure loss is inversely proportional to the second power of the inner diameter, it is possible to reduce the pressure loss at the terminal part by 30% or more by adjusting the average inner-diameter ratio at 1.2, to be specific by calculation. The "inner diameter" refers to the average of any two diameters of a hollow fiber measured on the interior side thereof. The average inner diameter can be measured in the manner described below. Firstly, cross-sectional examination of a hollow fiber membrane is carried out. The cross-sectional examination may be carried out by a method that involves cutting the hollow fiber membrane at a cross section vertical to the longitudinal direction and examining it with an optical microscope and/or an electron microscope while making sure that the entire cross section is included within the field of view, or by a method that involves nondestructive cross-sectional examination performed by X-ray CT (Computed Tomography). Within the cross section, a set of two diameters of one hollow fiber are measured on the interior side thereof, each of which is measured between points that are approximately diagonal to each other (between points that are different in phase by about 90 degrees) (or, if a flat portion is identified, the short and the long diameters are measured), and the resulting values are averaged and the resultant is regarded as the inner diameter. Alternatively, the edge of the inner diameter can be subjected to edge extraction, and the resulting inner circumference can be divided by the circular constant. The inner diameter is measured at ten random locations, and the average of them is regarded as the average inner diameter.

Preferably, the average inner-cavity cross-sectional-area ratio of the enlarged-diameter portion to the body portion is from 1.4 to 6.0. With the average inner-cavity cross-sectional-area ratio of the hollow fiber membranes falling within the above-mentioned range, fluid resistance can be reduced and a sufficient number of hollow fiber membranes can be accommodated inside the housing. The "average inner-cavity cross-sectional area" is measured by cross-sectional examination. As the method for the cross-sectional examination, a method that involves cutting the module at a cross section vertical to the longitudinal direction and acquiring a cross-sectional image with an optical microscope and/or an electron microscope, or a method that involves acquiring a cross-sectional image in a nondestructive manner by X-ray CT can be adopted. The "average inner-cavity cross-sectional area" is a value that is determined in an image acquired by binarization processing of the above-mentioned cross-sectional image. The average inner-cavity cross-sectional area can be obtained by averaging inner-cavity cross-sectional areas measured at ten random locations, or by calculating πD²/2 using the average inner diameter D.

Preferably, the hollow fiber membranes comprise a fluororesin as a main component. With the hollow fiber membranes comprising a fluororesin as a main component, chemical resistance and mechanical strength can be enhanced. Here, "a main component of the hollow fiber membranes" refers to a component that has the highest content proportion in mass, where the content proportion is 80 mass% or more, preferably 90 mass% or more, more preferably 95 mass% or more.

A hollow fiber membrane for a module according to another aspect of the present disclosure has a body portion, and an enlarged-diameter portion provided at both ends or one end of the body portion and having an inner diameter enlarged as compared to the body portion. The hollow fiber membrane for a module makes it possible to enhance separation performance of the hollow fiber membrane module.

### [Detailed Description of Embodiments]

In the following, a detailed description will be given of a hollow fiber membrane module and a hollow fiber membrane for a module according to the embodiments of the present disclosure, with reference to drawings.

### <Hollow Fiber Membrane Module>

A hollow fiber membrane module according to an aspect of the present disclosure is a hollow fiber membrane module that is capable of performing aeration, deaeration, filtration, and the like for liquid that is supplied into the hollow fiber membranes. The hollow fiber membrane module comprises a housing and a plurality of hollow fiber membranes. The hollow fiber membrane module is applicable for various purposes of use in membrane separation, such as filtration and deaeration. Therefore, in the hollow fiber membrane module, the permeation target of the hollow fiber membranes varies depending on the purpose of use such as filtration and deaeration. For example, when a hollow fiber membrane module 3 of this type is used as a filtration module, it allows permeation of solvent contained in the treatment-target liquid while it does not allow permeation of impurities of a certain particle size or larger contained in the treatment-target liquid. When the hollow fiber membrane module is used as a deaeration module, the hollow fiber membranes allow permeation of either liquid or gas. The hollow fiber membrane module is applicable in any field. For example, it is usable for various purposes, including purification and neutralization of rinsing water for semiconductors, electronic devices, and pharmaceuticals, food/beverage manufacturing waste water and industrial waste water, river water, lake water, swimming pool water, and public bath water, water treatment of drinking water and industrial water, and enrichment of liquid with a particular gas performed by permeation of a gas such as oxygen, ozone, carbon dioxide, nitrogen, and hydrogen.

The hollow fiber membrane module can be either a single-component type in which the hollow fiber membrane module is secured inside various apparatuses and the like, or a cartridge type in which the housing is independent of the membrane member having the hollow fiber membranes and the membrane member is inserted into the housing for use.

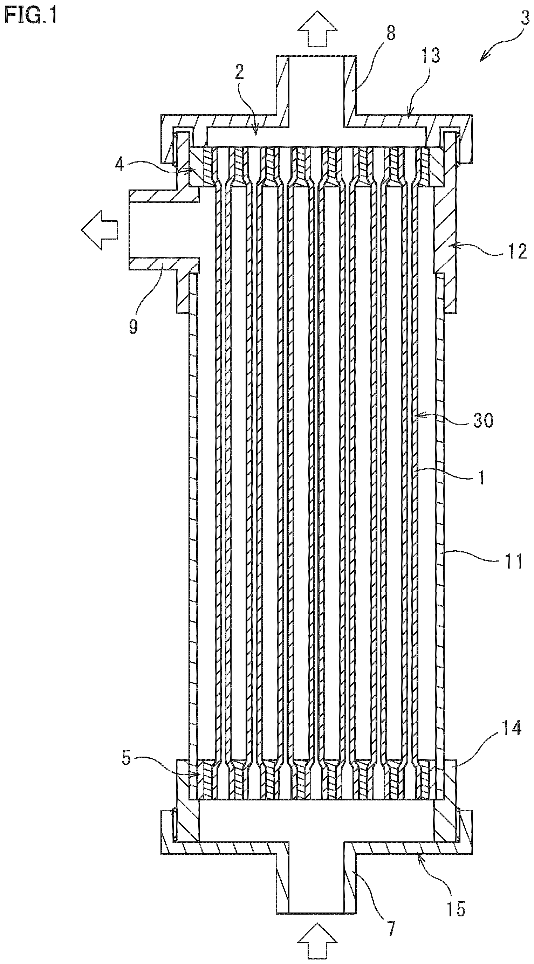

The hollow fiber membrane module comprises a potting portion provided around both ends or one end of the hollow fiber membrane bundle, in which space between the outer surface of the hollow fiber membranes and the inner surface of the housing is filled with a potting agent. Fig. 1 shows an example of a hollow fiber membrane module according to a first embodiment, a hollow fiber membrane module 3 for deaeration purposes that comprises a potting portion provided around both ends of the hollow fiber membrane bundle filled with a potting agent. Hollow fiber membrane module 3 comprises a membrane member 2 having a hollow fiber membrane bundle 30, and a tubular housing 11 that accommodates the membrane member 2. Hollow fiber membrane bundle 30 has a plurality of hollow fiber membranes 1 aligned in one direction. In addition to hollow fiber membrane bundle 30, membrane member 2 further has a first potting portion 4 that secures one end of the plurality of hollow fiber membranes 1, and a second potting portion 5 that secures the other end of the plurality of hollow fiber membranes 1.

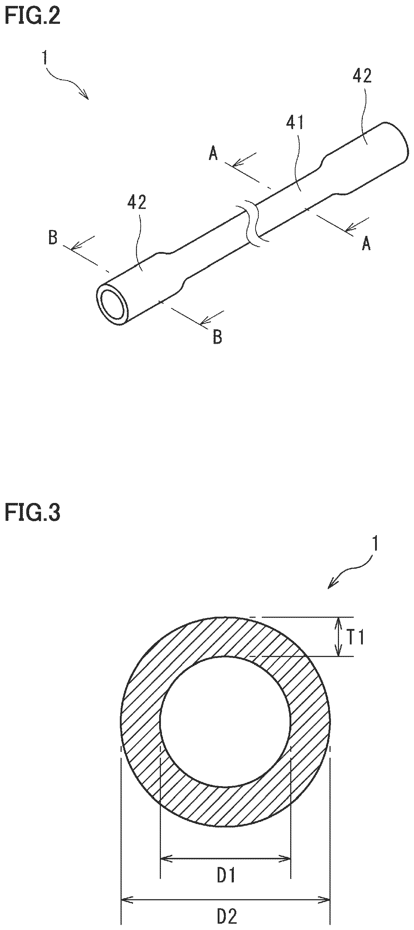

Hollow fiber membrane bundle 30 is a bundle of the plurality of hollow fiber membranes 1, and is accommodated inside the housing 11 in the longitudinal direction. As illustrated in Fig. 2, in the present embodiment, hollow fiber membrane 1 has a body portion 41, and enlarged-diameter portions 42 provided at both ends of body portion 41 and having their inner diameters enlarged as compared to body portion 41. Having enlarged-diameter portions 42 with their inner diameters enlarged as compared to body portion 41, hollow fiber membrane 1 makes it possible to enhance separation performance of hollow fiber membrane module 3.

Hollow fiber membrane module 3 comprises tubular housing 11 that accommodates membrane member 2 having the plurality of hollow fiber membranes 1. In other words, hollow fiber membrane bundle 30 is accommodated inside the housing 11. This hollow fiber membrane module 3 is of a type that is capable of permeating liquid across hollow fiber membranes 1 for deaeration of gas that is dissolved in the liquid. Hollow fiber membrane module 3 can have a configuration that has: tubular housing 11; a first sleeve 12 provided at one end of housing 11 and equipped with a gas nozzle 9 and an engagement structure for engagement with first potting portion 4; a first cap 13 that seals the end of first sleeve 12 opposite to housing 11 and is provided with a liquid outlet 8; a second sleeve 14 provided at the other end of housing 11; and a second cap 15 that seals the end of second sleeve 14 opposite to housing 11 and is provided with a liquid inlet 7.

Hollow fiber membrane module 3 has, at one end face, liquid inlet 7 through which the treatment-target liquid is supplied, and at the other end face, liquid outlet 8 through which the liquid that permeated across the plurality of hollow fiber membranes 1 is discharged. On the side surface of housing 11, gas nozzle 9 is provided. The treatment-target liquid supplied through the liquid inlet 7 into second cap 15 permeates across hollow fiber membranes 1 to be supplied into the housing 11. And then, through liquid outlet 8 provided on the side surface of housing 11 near the other end, the permeated liquid is discharged. Moreover, with a vacuum pump (not illustrated), air is sucked out through the gas nozzle 9, and thereby the pressure outside the hollow fiber membranes 1 is reduced. Then, the gas dissolved in the liquid permeating across the hollow fiber membranes 1 is sucked through the walls of hollow fiber membranes 1 toward gas nozzle 9, and discharged from the tip of gas nozzle 9.

Membrane member 2 has first potting portion 4 that holds one end of the plurality of hollow fiber membranes 1 and second potting portion 5 that holds the other end of the plurality of hollow fiber membranes 1. By holding both ends of the plurality of hollow fiber membranes 1, respectively, first potting portion 4 and second potting portion 5 hold the plurality of hollow fiber membranes 1 aligned in one direction, without them being entangled with each other. In addition, hollow fiber membranes 1 have enlarged-diameter portions 42 provided at both ends of body portion 41, respectively, and having their inner diameters enlarged as compared to body portion 41, and enlarged-diameter portions 42 at both ends are buried in first potting portion 4 and second potting portion 5, respectively. With enlarged-diameter portions 42 buried in first potting portion 4 and second potting portion 5, the hollow fiber membrane module is capable of reducing resistance against the fluid passing inside the hollow fiber membranes. Therefore, the hollow fiber membrane module has excellent separation performance.

First potting portion 4 and second potting portion 5 are constituted of a potting agent. Around both ends of hollow fiber membrane bundle 30, the space between the outer surface of hollow fiber membranes 1 and the inner surface of housing 11 is filled with the potting agent. More specifically, around both ends of hollow fiber membrane bundle 30, first potting portion 4 and second potting portion 5 bury both ends of hollow fiber membrane bundle 30, respectively, and secure hollow fiber membrane bundle 30 to the inner surface of housing 11. Each of first potting portion 4 and second potting portion 5 has its outer circumference portion constituted solely of the potting agent, and in the interior portion thereof, gaps between hollow fiber membranes 1 of hollow fiber membrane bundle 30 are filled with the potting agent.

The potting agent comprises a resin, a rubber, or an elastomer as a main component. The potting agent is not particularly limited, and examples thereof include epoxy resins, urethane resins, ultraviolet-curable resins, fluorine-containing resins, silicone resins, polyamide resins, and polyolefin resins such as polyethylene and polypropylene. Among these, epoxy resins and urethane resins are more preferable for their performance as adhesive.

As illustrated in Fig. 1, in first potting portion 4 and second potting portion 5, the potting agent does not fill the interior of hollow fiber membranes 1, and it fills only the space that stretches from the outer surface of hollow fiber membranes 1 and hollow fiber membrane bundle 30 to the interior wall of housing 11. In other words, hollow fiber membrane bundle 30 is secured to the interior wall of housing 11, with hollow fiber membranes 1 staying open.

The potting agent comprises a resin, a rubber, or an elastomer as a main component. The potting agent is not particularly limited, and examples thereof include epoxy resins, urethane resins, ultraviolet-curable resins, fluororesins, silicone resins, polyamide resins, and polyolefin resins such as polyethylene and polypropylene. Among these, fluororesins and silicone resins are preferable from the viewpoint of their good performance as adhesive to the hollow fiber membranes comprising polytetrafluoroethylene (PTFE) or modified polytetrafluoroethylene (modified PTFE) as a main component and/or to the housing comprising a fluororesin as a main component.

Examples of the material of housing 11 of hollow fiber membrane module 3 include resins including polyethylene (PE)-based resins such as copolymers of ethylene and α-olefin, low-density polyethylene, and high-density polyethylene, polypropylene (PP)-based resins such as propylene homopolymers, copolymers of propylene and ethylene, and copolymers of propylene, ethylene, and another α-olefin, epoxy resins, PTFE (polytetrafluoroethylene), PFA (perfluoroalkyl vinyl ether copolymer), FEP (tetrafluoroethylene-hexafluoropropylene copolymer), polyvinyl chloride, polyester, polycarbonate, polystyrene, styrene-butadiene copolymers (SBS), and acrylonitrile-butadiene-styrene copolymers (ABS); only one of them may be used, or a mixture of them may be used. Other examples include metals such as iron, stainless steel, and aluminum.

Hollow fiber membranes 1 are hollow fiber membranes for a module, and they are also separation membranes in the form of hollow fibers. Hollow fiber membranes 1 are not particularly limited in terms of the material, membrane shape, membrane configuration, and the like, and, for example, those comprising a resin as a main component can be used.

Examples of the resin include polyolefin-based resins such as polyethylene, polypropylene, and poly(4-methylpentene-1), silicone-based resins such as polydimethylsiloxane and copolymers thereof, fluorine-based resins such as polytetrafluoroethylene, modified polytetrafluoroethylene, and polyvinylidene fluoride, ethylene-(vinyl alcohol) copolymers, polyamide, polyimide, polyether imide, polystyrene, polysulfone, polyvinyl alcohol, polyphenylene ether, polyphenylene sulfide, cellulose acetate, polyacrylonitrile, and the like. Among these, from the viewpoint of enhancing chemical resistance and mechanical strength, fluororesins are preferable and polytetrafluoroethylene (PTFE) or modified polytetrafluoroethylene (modified PTFE) is more preferable as a main component of the hollow fiber membranes.

In terms of the shape of the side wall, hollow fiber membrane 1 may be a porous membrane, a microporous membrane, or a homogeneous membrane without pores (a nonporous membrane), for example. In terms of the membrane configuration, hollow fiber membrane 1 may be a symmetric membrane (a homogeneous membrane) in which the chemical or physical structure is homogeneous throughout the membrane, or an asymmetric membrane (a non-homogeneous membrane) in which the chemical or physical structure of the membrane varies depending on the parts of the membrane, for example. The asymmetric membrane (a non-homogeneous membrane) is a membrane that has a nonporous dense layer and a porous layer. In this case, the dense layer may be formed anywhere in the membrane, such as at the surface layer part of the membrane or inside the porous membrane. The non-homogeneous membrane encompasses a composite membrane that has different chemical structures and a multilayer membrane such as a three-layer membrane.

The lower limit to an average outer diameter D2 of hollow fiber membranes 1 at body portion 41 is not particularly limited, and it is preferably 0.1 mm, more preferably 0.2 mm. The upper limit to the average outer diameter D2 of hollow fiber membranes 1 is preferably 0.70 mm, more preferably 0.4 mm. When the average outer diameter D2 is below the above-mentioned lower limit, pressure loss can be increased. On the other hand, when the average outer diameter D2 exceeds the above-mentioned upper limit, the area of the membranes that can fit inside the housing 11 can be decreased, or the compressive strength can be decreased to allow a rupture to occur due to internal pressure or to allow buckling to occur due to external pressure. The "outer diameter" refers to the average of any two diameters of a hollow fiber on its outer side. The "average outer diameter" can be measured in the manner described below. Firstly, similarly to the above-described measurement of the average inner diameter, cross-sectional examination of a hollow fiber membrane is carried out. The cross-sectional examination may be carried out by a method that involves cutting the hollow fiber membrane at a cross section vertical to the longitudinal direction and examining it with an optical microscope and/or an electron microscope while making sure that the entire cross section is included within the field of view, or by a method that involves nondestructive cross-sectional examination performed by X-ray CT. Within the cross section, a set of two diameters of one hollow fiber are measured on the exterior side thereof, each of which is measured between points that are approximately diagonal to each other (between points that are different in phase by about 90 degrees), and the resulting values are averaged and the resultant is regarded as the outer diameter. The outer diameter is measured at ten random locations, and the average of them is regarded as the average outer diameter.

The lower limit to an average inner diameter D1 of hollow fiber membranes 1 at body portion 41 is not particularly limited, and it is preferably 0.05 mm, more preferably 0.1 mm. The upper limit to the average inner diameter D 1 of the hollow fiber membranes is preferably 0.32 mm, more preferably 0.2 mm. When the average inner diameter D1 is below the above-mentioned lower limit, pressure loss can be increased. On the other hand, when the average inner diameter D1 exceeds the above-mentioned upper limit, compressive strength can be decreased, and thereby a rupture can occur due to internal pressure or a buckling can occur due to external pressure.

The lower limit to an average outer diameter D4 of hollow fiber membranes 1 at enlarged-diameter portion 42 is not particularly limited, and it is preferably 0.12 mm, more preferably 0.24 mm. The upper limit to the average outer diameter D4 of hollow fiber membranes 1 is preferably 1.75 mm, more preferably 1.0 mm. When the average outer diameter D4 is below the above-mentioned lower limit, fluid resistance can rise. On the other hand, when the average outer diameter D4 exceeds the above-mentioned upper limit, the number of hollow fiber membranes 1 that can fit inside the housing 11 can be decreased.

The lower limit to an average inner diameter D3 of hollow fiber membranes 1 at enlarged-diameter portion 42 is not particularly limited, and it is preferably 0.06 mm, more preferably 0.12 mm. The upper limit to the average inner diameter D3 of the hollow fiber membranes is preferably 0.80 mm, more preferably 0.50 mm. When the average inner diameter D3 is below the above-mentioned lower limit, fluid resistance can rise. On the other hand, when the average inner diameter D3 exceeds the above-mentioned upper limit, compressive strength can be decreased, and thereby a rupture can occur due to internal pressure or a buckling can occur due to external pressure.

The lower limit to an average thickness T1 of hollow fiber membranes 1 is preferably 0.01 mm, more preferably 0.02 mm. The upper limit to the average thickness T1 of hollow fiber membranes 1 is preferably 0.20 mm, more preferably 0.10 mm. When the average thickness T1 is below the above-mentioned lower limit, compressive strength can be decreased, and thereby a rupture can occur due to internal pressure or a buckling can occur due to external pressure. On the other hand, when the average thickness T1 exceeds the above-mentioned upper limit, gas permeation properties can be degraded. The "thickness" is determined by the following mathematical expression: ((average outer diameter)-(average inner diameter))/2. The "average thickness" refers to the average of thicknesses at any ten locations.

The lower limit to the average inner-diameter ratio of the enlarged-diameter portion to the body portion is preferably 1.2, more preferably 1.3. The upper limit to the average inner-diameter ratio is preferably 2.5, more preferably 2.0. Because pressure loss is inversely proportional to the second power of the inner diameter, it is possible to reduce the pressure loss at the terminal part by 30% or more, to be specific by calculation. When the average inner-diameter ratio is below the above-mentioned lower limit, the fluid-resistance-lowering effect can be degraded. On the other hand, when the average inner-diameter ratio exceeds the above-mentioned upper limit, the number of hollow fiber membranes 1 that can fit inside the housing 11 can be decreased. With the average inner-diameter ratio of the hollow fiber membranes falling within the above-mentioned range, fluid resistance can be reduced and a sufficient number of hollow fiber membranes can be accommodated inside the housing.

The lower limit to the average inner-cavity cross-sectional-area ratio of the enlarged-diameter portion to the body portion is preferably 1.4, more preferably 1.7. The upper limit to the average inner-cavity cross-sectional-area ratio is preferably 6.0, more preferably 4.0. When the average inner-cavity cross-sectional-area ratio is below the above-mentioned lower limit, fluid resistance can rise. On the other hand, when the average inner-cavity cross-sectional-area ratio exceeds the above-mentioned upper limit, the number of hollow fiber membranes 1 that can fit inside the housing 11 can be decreased. With the average inner-cavity cross-sectional-area ratio of the hollow fiber membranes falling within the above-mentioned range, fluid resistance can be reduced and a sufficient number of hollow fiber membranes can be accommodated inside the housing.

The lower limit to the average pore size of hollow fiber membranes 1 is preferably 3.0 nm, more preferably 5.0 nm. The upper limit to the average pore size of hollow fiber membranes 1 is preferably 50.0 nm, more preferably 40.0 nm. When the average pore size is below the above-mentioned lower limit, aeration performance can become insufficient. On the other hand, when the average pore size exceeds the above-mentioned upper limit, water pressure resistance can be decreased, and, thereby, leakage of liquid such as, for example, water containing impurities such as surfactants, can occur.

The average pore size is a value determined in the following manner: by a bubble point method (ASTM F316-86, JIS K 3832) with the use of a pore size distribution measuring instrument and/or the like, the relationship between the differential pressure applied to the membrane and the flow rate of air permeation across the membrane is measured in a state where the membrane is dry and also in a state where the membrane is wet with liquid; the graphs thus obtained are regarded as a dry curve and a wet curve, respectively; and the differential pressure for the point of intersection of a curve derived from the dry curve at half the flow rate and the wet curve is defined as P (Pa) and put in d=cy/P, and d (nm) is the average pore size. In this equation, c is a constant, which is 2860, and γ is the surface tension of the liquid (dyn/cm=mN/m).

Alternatively, the pore size of the hollow fiber membranes can also be measured by a bubble point method that involves liquid-liquid phase substitution with the use of a porometer. Alternatively, because PTFE as a main component of the hollow fiber membranes is a hydrophobic resin, the pore size of the hollow fiber membranes can also be measured by the Washburn equation, with the use of a porosimeter of pure water porosimetry type which adopts the same principle as of a porosimeter of mercury porosimetry type.

As long as a desired effect of the present disclosure is not impaired, hollow fiber membranes 1 may contain other resins except the main component resin, as well as additives. Examples of the additives include lubricant, pigment for coloring, inorganic filler for wear resistance improvement, low-temperature flow prevention, and/or pore formation facilitation, metal powder, metal oxide powder, metal sulfide powder, and the like.

### [Method of Producing Hollow Fiber Membranes]

Next, a description will be given of an example of a method of producing the above-mentioned hollow fiber membranes. The method of producing hollow fiber membranes is preferably the method described in International Patent Laying-Open No. WO 2020/084930, for example, and, preferably, it has a shaping step for shaping a hollow fiber membrane-forming raw material into a tube form, a sintering step for heating the resulting tube-shaped article to a temperature equal to or higher than the melting point of the hollow fiber membrane-forming raw material, a step for cooling the resin thus melted, and a stretching step for stretching the non-porous tube-shaped article to form pores. In this way, by stretching the hollow fiber membranes after shaping them, it is possible to form hollow fiber membranes that are porous with smaller pores.

### (Shaping Step)

In the shaping step, a hollow fiber membrane-forming raw material is shaped into a tube form to obtain a tube-shaped article.

In the case to shape a hollow fiber membrane-forming raw material into a tube form to obtain a tube-shaped article having certain shape and dimension, a known method for shaping powder into a membrane may be employed, which include, for example, a method that involves blending and mixing raw material powder with an extrusion aid followed by extrusion shaping of the paste into a tube form, and a method that involves shaping raw material dispersion and/or the like followed by drying and removing the dispersion medium (a casting method).

### (Sintering Step)

In the sintering step, the tube-shaped article is heated to a temperature equal to or higher than the melting point of the hollow fiber membrane-forming raw material to obtain a non-porous, tube-shaped article. The non-porous, membrane-form shaped article means a membrane in which almost none of its pores pass through the membrane, and more specifically, a membrane having a Gurley second equal to or more than 5000 seconds is preferable. For the purpose of completely melting the hollow fiber membrane-forming raw material to produce a non-porous, membrane-form shaped article with a great Gurley second, the heating is preferably performed at a temperature above the melting point of the raw material, and for the purpose of inhibiting degradation and/or modification of the resin, the heating temperature is preferably equal to or lower than 450°C.

### (Cooling Step)

After the sintering step, a step for cooling by slow cooling is preferably carried out. In the cooling step, a method that involves heating to a temperature equal to or higher than the melting point of the hollow fiber membrane-forming raw material followed by slow cooling to the crystalline melting point or lower, and/or a method that involves heating at a temperature slightly lower than the melting point of the hollow fiber membrane-forming raw material for a certain period of time (hereinafter also called "constant-temperature treatment") may be employed. By this cooling, crystals can be formed in the hollow fiber membrane-forming raw material and, prior to the subsequent stretching step, the degree of crystallinity of the resin of the hollow fiber membrane-forming raw material can be made to reach saturation, and, as a result, it is possible to increase the pore size reproducibility during the porous membrane production.

### (Stretching Step)

In the stretching step, the non-porous, tube-shaped article thus obtained is stretched to form pores. Porous hollow fiber membranes can be obtained by stretching the non-porous, tube-shaped article. In the stretching step, the stretching may be carried out solely in the axial direction, or in both the axial direction and the circumferential direction (the direction in which the diameter is enlarged). The degree of stretching in the axial direction can be from 3 times to 10 times, for example, and the degree of stretching in the circumferential direction can be from 2 times to 4 times, for example. By adjusting the stretching conditions such as the stretching temperature and the degree of stretching, it is possible to adjust the size and shape of the pores of the hollow fiber membranes.

### (Diameter-Enlarging Step)

It is possible to enlarge the diameter, by heating the hollow fibers while the inner diameters at both ends are being enlarged by internal pressure application or by mandrel insertion, or by utilizing a phenomenon of inner-diameter enlargement that occurs when both ends are heated and made to shrink in a direction opposite to the stretching direction.

With this hollow fiber membranes for a module, it is possible to enhance the separation performance of the hollow fiber membrane module.

### [Other Embodiments]

It should be construed that the embodiments disclosed herein are given by way of illustration in all respects, not by way of limitation. It is intended that the scope of the present invention is defined by claims, not limited by the configurations of the embodiments described above, and encompasses all modifications and variations equivalent in meaning and scope to the claims.

In the above-mentioned embodiment, a plurality of straight hollow fiber membranes are made into a bundle to form a hollow fiber membrane bundle and a potting portion filled with a potting agent is provided around both ends of the hollow fiber membrane bundle; alternatively, a potting portion filled with a potting agent may be provided around one end of the hollow fiber membrane bundle. Examples of the configuration in which around one end of the hollow fiber membrane bundle is filled with a potting agent include a hollow fiber membrane module that is formed by folding a plurality of hollow fiber membranes in half to form a hollow fiber membrane bundle, which has a substantially U-shaped loop at one end, and then providing a potting portion to the open side of the hollow fiber membrane bundle.

In this case, the hollow fiber membrane has an enlarged-diameter portion at one end.

In the above-described embodiment, the hollow fiber membrane module is a liquid-permeation-type hollow fiber membrane module capable of permeating liquid across the hollow fiber membranes to remove the dissolved gas from the liquid; a gas-permeation-type hollow fiber membrane module is also possible, which is capable of permeating gas across the hollow fiber membranes to remove the dissolved gas from liquid.

### [Examples]

In the following, a more detailed description will be given of the present invention with reference to examples. However, the present invention is not limited to these examples.

### <Hollow Fiber Membrane Module Tests No. 1 to No. 3>

Hollow fiber membrane modules of Test No. 1 to Test No. 3 were produced. The hollow fiber membrane bundle was formed by using PTFE fine powder ("CD123" manufactured by AGC irradiated with γ ray of 0.8 kGy) as a raw material.

### [Shaping Step]

The PTFE powder thus obtained was shaped into a tube form that had a body portion and enlarged-diameter portions at both ends as illustrated in Fig. 2, under the conditions described below. As the method for molding into a tube form, a paste extrusion method and/or a ram extrusion method described in "Fluororesin Handbook (written by Takaomi SATOKAWA, from Nikkan Kogyo Shimbun)" can be employed, for example. In this Example, the paste extrusion method was employed. To the PTFE powder, 23 parts by mass of a liquid lubricant ("Solvent Naphtha" manufactured by FUJIFILM Wako Pure Chemical Corporation) was mixed, and the resultant was pressed and compacted into a round tubular shape by a preliminary molding machine, followed by extrusion with an extruder into a coil form, and thereby a tube-shaped article having an outer diameter of 0.7 mm and an inner diameter of 0.35 mm was shaped.

### [Drying Step]

In a drying step, the liquid lubricant was dried in a hot-air-circulation thermostatic chamber set at 200°C.

### [Sintering Step]

With the use of a continuous stretching/sintering machine, the tube-shaped article was heated at a furnace temperature of 420°C, which was equal to or higher than the melting point of PTFE or modified PTFE, and sintered at a stretch factor of 0.9 times, to obtain a translucent non-porous tube.

### [Slow Cooling Step]

The resulting translucent non-porous tube in a coil form was placed in a hot-air-circulation thermostatic chamber and heated at 350°C for 5 minutes or longer, and then slowly cooled at a cooling rate equal to or less than -1°C/minute continuously to a temperature of 300°C or lower.

### [Stretching Step]

In a stretching step, the non-porous tube-shaped article thus obtained was stretched under the conditions described below to obtain a porous tube-shaped article. A specially-made reel-to-reel stretching machine was used, and with the supply-side capstan peripheral speed adjusted at 0.2 m/minute, the take-up-side capstan peripheral speed at 1 m/minute, and the temperature of a furnace positioned between the capstans at 170°C, continuous stretching was carried out at a stretch factor of 5 times. The average outer diameter, the average inner diameter, and the average thickness were determined by the above-described methods. In addition, the hollow fiber membranes with a length of 100 mm produced by the above-described method were used. The results of measurement of the average thickness, the average outer diameter, and the average inner diameter of the hollow fiber membranes used in Test No. 1 to Test No. 3 are given in Table 1.

### [Diameter-Enlarging Step]

The hollow fibers were cut into a length of 280 mm, and then, in No. 1, at both ends, a region of about 80 mm was heated with a heat gun that was set at 330°C, and made to shrink into about 40 mm. In No. 2, into the region of about 40 mm thus shrunk, a mandrel having an outer diameter of 0.2 mm was inserted to enlarge the inner diameter, and at the same time, a heat gun at 330°C was used to fix the size. The mandrel was taken out, and thereby, hollow fibers with both ends enlarged in diameter were obtained. The hollow fibers of each of No. 1 and No. 2 had a total length of about 200 mm. In No. 3, the hollow fibers were cut into a total length of 200 mm, but not enlarged in diameter.

Next, into a round tubular housing made of tetrafluoroethylene-(perfluoroalkyl vinyl ether) copolymer (PFA) with an inner diameter of 16 mm and a length of 200 mm, which was equipped with ports having an inner diameter of 4.35 mm welded on the side wall at two positions spaced from each other in the longitudinal direction different in phase by 180 degrees, the hollow fiber membrane bundle (made of 930 hollow fibers) was inserted, and a potting agent was filled to around both ends of the hollow fiber membrane bundle. As the potting agent, a two-part hardening-type fluoroelastomer "SIFEL 8570" manufactured by Shin-Etsu Chemical Co., Ltd. was used. The amount to fill was adjusted so that filling reached a height of 40 mm from the end of the module housing. After the filling and hardening, the end of the module housing was cut off by 10 mm. Then, into each end of the module, a specially-made PFA cap having a port with an inner diameter of 4.35 mm was inserted, and secured with a fluororesin tape (Nejiseal manufactured by Sumitomo Electric Fine Polymer).

### [Evaluation]

### (Method for Cross-Sectional Examination of Hollow Fibers, and Measurement of Average Inner-Cavity Cross-Sectional Area)

The average inner-cavity cross-sectional area was measured by cross-sectional examination of an X-ray CT image. A cross-sectional image of the hollow fibers as the measurement target was acquired with the use of a section microfocus X-ray CT ("SMX-225CT" manufactured by Shimadzu Corporation), and examination was performed at a voxel size of 11 µm. A planar cross-sectional image was acquired for each of the hollow fiber membranes of No. 1 to No. 3, and the cross-sectional image thus obtained was saved as an image file and subjected to binarization processing, followed by measurement of the average inner-cavity cross-sectional area. The inner-cavity cross-sectional area was measured at ten locations, and the average value was regarded as the average inner-cavity cross-sectional area.

### [Evaluation of Separation Performance of Hollow Fiber Membrane Module]

### (Measurement of Passing Air Pressure)

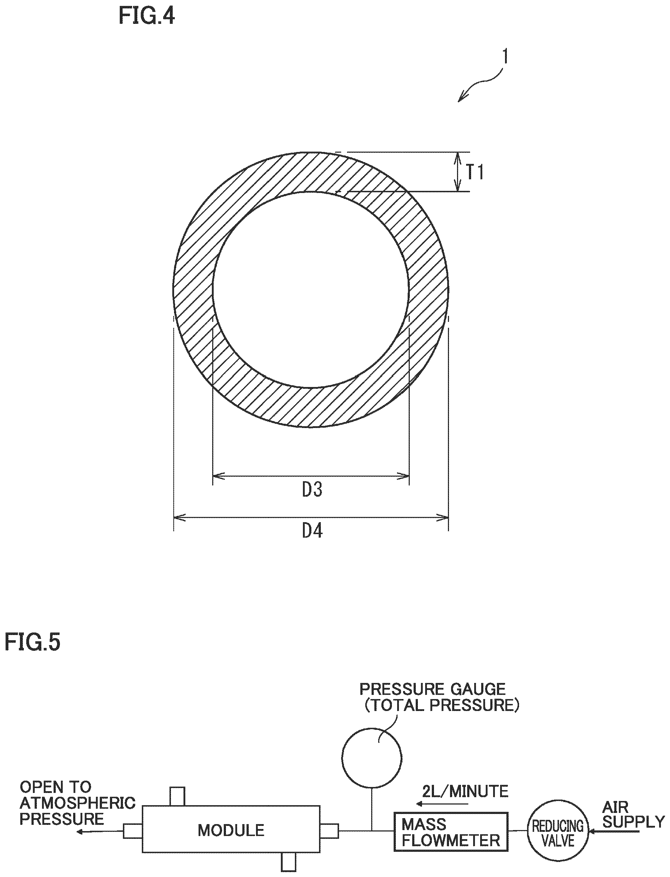

The differential pressure required for passing air inside the inner cavity of the hollow fiber membranes at 2 L/minute was measured. The apparatus illustrated in Fig. 5 was used, where one side of the module was open to the atmosphere, and, from the other end (upstream), air was introduced. The flow rate of air was adjusted with a reducing valve provided upstream of the module, and the differential pressure was regarded as the value of total pressure at the upstream of the module.

### (Deaeration Performance)

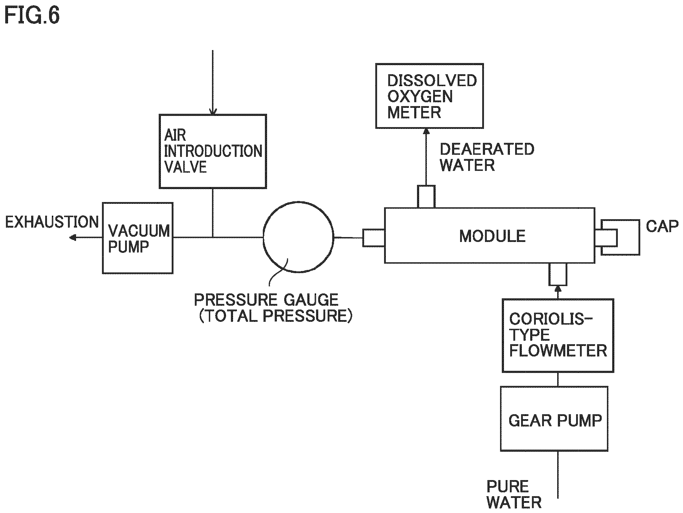

Deaeration performance in an external flow mode was measured. The apparatus illustrated in Fig. 6 was used, where one side of the module was sealed with a cap, and from the other end at the downstream, the inner cavity of the hollow fiber membranes was evacuated with the use of a vacuum pump. At this time, an air introduction valve was used for adjusting the downstream pressure, namely the gauge pressure, at -85 kPa. At a room temperature of 25°C, pure water with a dissolved oxygen concentration of 8.2 ppm was made to permeate from the port provided on the side surface so that it was brought into contact with the outside of the hollow fibers of the hollow fiber membrane module. At this time, the flow rate was adjusted with a gear pump, and the flow rate was adjusted at 100 ml/minute with a Coriolis-type flowmeter.

The results of measurement of the passing air pressure and the deaeration performance of the hollow fiber membrane modules of Test No. 1 to Test No. 3, as well as the average inner diameter, the average outer diameter, and the average inner-cavity cross-sectional area of the hollow fiber membranes measured by X-ray CT are given in Table 1.

**[Table 1]**

| Hollow fiber membrane module Test No. | Number of hollow fibers | Average thickness T1 [mm] | Body portion | | | | Enlarged-diameter portion | | | | Module evaluation | | | |
|---|---|---|---|---|---|---|---|---|---|---|---|---|---|---|
| | | | Average inner diameter D1 [mm] | Length [mm] | Average outer diameter D2 [mm] | Average inner-cavity cross-sectional area [mm²] | Method for enlargement | Average inner diameter D3 [mm] | Length [mm] | Average inner-cavity cross-sectional area [mm²] | Inner-diameter ratio | Cross-sectiona l area ratio | Differential pressure required for passing air at 2L/min [kPa] | Dissolved oxygen after passing water at flow rate of 100ml/min at vacuum of -85kPa [ppm] |
| No. 1 | 930 | 0.116 | 012 | 120 | 0.35 | 0.011 | Thermal shrinkage | 0.175 | 30 | 0.024 | 1.46 | 210 | 11 | 2.0 |
| No. 2 | 930 | 0.116 | 012 | 120 | 0.35 | 0.011 | Mandrel insertion | 0.190 | 30 | 0.028 | 1.58 | 2.45 | 10 | 2.0 |
| No. 3 | 930 | 0.116 | 012 | 120 | 0.35 | 0.011 | None | 0.120 | 30 | 0.011 | 1.00 | 1.00 | 14 | 2.2 |

Referring to Table 1, in No. 1 and No. 2 which had hollow fiber membranes having a body portion and an enlarged-diameter portion having its inner diameter enlarged as compared to the body portion, the differential pressure was lower by about 20% to 30% than in No. 3 which did not receive diameter-enlarging treatment. This indicates that the energy consumption required for passing fluid into the inner cavity of the hollow fiber membranes can be reduced by about 20% to 30% by using hollow fiber membranes that have a body portion and an enlarged-diameter portion having its inner diameter enlarged as compared to the body portion. In addition, from the results of evaluation of deaeration performance, in No. 1 and No. 2 which had hollow fiber membranes having a body portion and an enlarged-diameter portion having its inner diameter enlarged as compared to the body portion, deaeration efficiency was higher by about 10% than in No. 3 in which the hollow fiber membranes did not have an enlarged-diameter portion. This can be understood as below. In No. 3, pressure loss at the termini of the hollow fiber membranes was great, and therefore, at the body portion of the hollow fiber membranes, the degree of vacuum inside the inner cavity of the hollow fiber membranes was low (in other words, the oxygen partial pressure inside and outside the hollow fiber membranes was great). On the other hand, in No. 1 and No. 2, pressure loss at the termini of the hollow fiber membranes was small, and therefore, at the body portion of the hollow fiber membranes, the degree of vacuum inside the inner cavity of the hollow fiber membranes was high (in other words, the difference between the oxygen partial pressure inside the hollow fiber membranes and that of outside was great), which led to the high deaeration efficiency. Hence, it is indicated that when the hollow fiber membrane module comprises hollow fiber membranes that have a body portion and an enlarged-diameter portion having its inner diameter enlarged as compared to the body portion, energy efficiency as well as efficiency of functions such as filtration, deaeration, and aeration are enhanced.

As described above, it was proven that the above-mentioned hollow fiber membrane module has excellent separation performance. Hence, the above-mentioned hollow fiber membrane module can be used suitably for an aeration module in semiconductor manufacturing process, waste water treatment, beverage/food manufacturing process, chemical solution manufacturing process, and the like, as well as for a filtration apparatus and a deaeration apparatus in semiconductor manufacturing process, printers, liquid crystal encapsulation process, chemical solution manufacturing process, hydraulic instruments, samples for analyzers, artificial blood vessels, heart-lung machine, and the like.

### REFERENCE SIGNS LIST

1 hollow fiber membrane, 2 membrane member, 3 hollow fiber membrane module, 4 first potting portion, 5 second potting portion, 7 liquid inlet, 8 liquid outlet, 9 gas nozzle, 11 housing, 12 first sleeve, 13 first cap, 14 second sleeve, 15 second cap, 30 hollow fiber membrane bundle, 41 body portion, 42 enlarged-diameter portion.

## Claims

1. A hollow fiber membrane module comprising:
a hollow fiber membrane bundle that has a plurality of hollow fiber membranes aligned in one direction;
a housing that accommodates the hollow fiber membrane bundle; and
a potting portion provided around both ends or one end of the hollow fiber membrane bundle, in which space between an outer surface of the hollow fiber membranes and an inner surface of the housing is filled with a potting agent, wherein
each of the hollow fiber membranes has a body portion, and an enlarged-diameter portion provided at both ends or one end of the body portion and having an inner diameter enlarged as compared to the body portion, and
the enlarged-diameter portion is buried in the potting portion.

2. The hollow fiber membrane module according to claim 1, wherein an average inner-diameter ratio of the enlarged-diameter portion to the body portion is from 1.2 to 2.5.

3. The hollow fiber membrane module according to claim 1 or 2, wherein an average inner-cavity cross-sectional-area ratio of the enlarged-diameter portion to the body portion is from 1.4 to 6.0.

4. The hollow fiber membrane module according to any one of claims 1 to 3, comprising a fluororesin as a main component.

5. A hollow fiber membrane for a module, comprising:
a body portion; and
an enlarged-diameter portion provided at both ends or one end of the body portion and having an inner diameter enlarged as compared to the body portion.

## Amended claims

### Amended claims under Art. 19.1 PCT

1. A hollow fiber membrane module comprising:
a hollow fiber membrane bundle that has a plurality of hollow fiber membranes aligned in one direction;
a housing that accommodates the hollow fiber membrane bundle; and
a potting portion provided around both ends or one end of the hollow fiber membrane bundle, in which space between an outer surface of the hollow fiber membranes and an inner surface of the housing is filled with a potting agent, wherein
each of the hollow fiber membranes has a body portion, an enlarged-diameter portion provided at both ends or one end of the body portion and having an inner diameter enlarged as compared to the body portion, and a tapered portion provided between the body portion and the enlarged-diameter portion and having an inner diameter enlarged gradually in a direction from the body portion toward the enlarged-diameter portion,
neither the body portion nor the enlarged-diameter portion has a tapered shape,
the enlarged-diameter portion is buried in the potting portion, and
in a longitudinal direction of the hollow fiber membrane, the body portion is longer than the enlarged-diameter portion and the enlarged-diameter portion is longer than the tapered portion.

2. The hollow fiber membrane module according to claim 1, wherein an average inner-diameter ratio of the enlarged-diameter portion to the body portion is from 1.2 to 2.5.

3. The hollow fiber membrane module according to claim 1 or 2, wherein an average inner-cavity cross-sectional-area ratio of the enlarged-diameter portion to the body portion is from 1.4 to 6.0.

4. The hollow fiber membrane module according to any one of claims 1 to 3, comprising a fluororesin as a main component.

5. A hollow fiber membrane for a module, comprising:
a body portion; and
an enlarged-diameter portion provided at both ends or one end of the body portion and having an inner diameter enlarged as compared to the body portion; and
a tapered portion provided between the body portion and the enlarged-diameter portion and having an inner diameter enlarged gradually in a direction from the body portion toward the enlarged-diameter portion, wherein
neither the body portion nor the enlarged-diameter portion has a tapered shape, and
in a longitudinal direction of the hollow fiber membrane for a module, the body portion is longer than the enlarged-diameter portion and the enlarged-diameter portion is longer than the tapered portion.
